# EUROPÄISCHE PATENTSCHRIFT

(11) **EP 1 254 947 B1**
(45) Veröffentlichungstag und Bekanntmachung des Hinweises auf die Patenterteilung: **25.02.2004**
(21) Anmeldenummer: 02009406.6
(22) Anmeldetag: 25.04.2002
(51) Int. Cl.: C11D 1/72, C07C 43/13

(54) **Geminitenside**
Gemini surfactants
Tensioactifs gemini

(30) Priorität: 04.05.2001 DE 10121723
(43) Veröffentlichungstag der Anmeldung: 06.11.2002
(73) Patentinhaber: Cognis Deutschland GmbH & Co. KG, 40589 Düsseldorf (DE)
(72) Erfinder: Raths, Hans-Christian, Dr., 40789 Monheim (DE); Weuthen, Manfred, Dr., 40764 Langenfeld (DE); Elsner, Michael, 42579 Heiligenhaus (DE)

(56) Entgegenhaltungen:
- EP-A- 0 300 305
- EP-A- 0 884 298
- WO-A-98/15346
- DE-A- 19 513 391
- US-A- 3 671 458

## Beschreibung

### Gebiet der Erfindung

Die Erfindung betrifft Geminitenside, gegebenenfalls in Verbindung mit in Wasch-, Spül- und Reinigungsmittel üblichen Inhaltsstoffen, gegebenenfalls mit weiteren nichtionischen Tensiden und anionischen Tensiden, sowie die Verwendung derartiger Geminitenside zur Verbesserung des Netzverhaltens und der Kunststoffverträglichkeit, zur vereinfachten Herstellung von festen Reinigern und als schaumdämpfendes Tensid in Klarspülformulierungen.

### Stand der Technik

Mittel für das Spülen und Reinigen harter, nichttextiler Oberflächen, die im Haushalt und Gewerbesektor vorkommen sollen, die meist bei Anwendung ein geringfügiges Schaumvolumen entwickeln, das sich innerhalb von wenigen Minuten signifikant weiter verringert. Mittel dieser Art sind seit langem bekannt und im Markt etabliert. Es handelt sich dabei im wesentlichen um wäßrige Tensidlösungen unterschiedlicher Art mit oder ohne Zusatz von Buildern, Lösungsvermittlern (Hydrotropen) oder Lösungsmitteln. Zum Nachweis der Wirksamkeit bei Beginn der Reinigungsarbeit wird vom Verbraucher zwar ein gewisses Schäumen der Anwendungslösung gewünscht, der Schaum soll jedoch rasch zusammenfallen, damit einmal gereinigte Flächen nicht nachgewischt werden müssen. Zu diesem Zweck werden Mittel der genannten Art üblicherweise mit schwach schäumenden nichtionischen Tensiden versetzt.
Besonders an maschinell gespültes Geschirr werden heute höhere Anforderungen gestellt als an manuell gespültes Geschirr. So wird auch ein von Speiseresten völlig gereinigtes Geschirr dann als nicht einwandfrei bewertet, wenn es nach dem maschinellen Geschirrspülen noch weißliche, auf Wasserhärte oder anderen mineralischen Salzen beruhende Flecken aufweist, die mangels Netzmittel aus eingetrockneten Wassertropfen stammen.
Um glanzklares und fleckenloses Geschirr zu erhalten, setzt man daher Klarspüler ein. Der Zusatz von flüssigem oder festem Klarspüler, der separat zugegeben werden kann oder bereits in gebrauchsfertiger Darreichungsform mit dem Reinigungsmittel und/oder Regeneriersalz zusammen ("2 in 1", "3 in 1", z.B. in Form von Tabs und Pulvern) vorliegt sorgt dafür, dass das Wasser möglichst vollständig vom Spülgut abläuft, so dass die unterschiedlichen Oberflächen am Ende des Spülprogramms rückstandsfrei und glänzend sind.

### Geänderte Beschreibungsseite 2:

Marktübliche Klarspülmittel stellen Gemische z.B. aus nichtionischen Tensiden, Lösungsvermittlern, organischen Säuren und Lösungsmitteln, Wasser sowie ggf. Konservierungsmittel und Duftstoffe dar.
Die Aufgabe der Tenside in diesen Mitteln besteht darin, die Grenzflächenspannung des Wassers so zu beeinflussen, dass es in einem möglichst dünnen, zusammenhängenden Film vom Spülgut ablaufen kann, so dass beim anschließenden Trocknungsvorgang keine Wassertropfen, Streifen oder Filme zurückbleiben (sogenannte Netzwirkung bzw. Netzverhalten).
Deswegen müssen Tenside in Klarspülern auch den durch Speisereste auftretenden Schaum in der Geschirrspülmaschine dämpfen. Da die Klarspüler meist Säuren für eine Verbesserung des Klartrockeneffekts enthalten, müssen die eingesetzten Tenside zusätzlich relativ hydrolyseunempfindlich gegenüber Säuren sein.

Klarspüler werden sowohl im Haushalt als auch in gewerblichen Bereichen eingesetzt. In Haushaltsgeschirrspülern wird der Klarspüler meist nach dem Vorspül- und Reinigungsgang bei knapp 40°C-65°C zudosiert. Die gewerblichen Geschirrspülmaschinen arbeiten mit nur einer Reinigungsflotte, die lediglich durch Zugabe der Klarspüllösung aus dem vorhergehenden Spülvorgang erneuert wird. Es findet also während des gesamten Spülprogrammes kein vollständiger Wasseraustausch statt. Daher muß der Klarspüler auch schaumdämpfend wirken, temperaturstabil sein bei einem starken Temperaturgefälle von 85-35°C und außerdem ausreichend stabil gegen Alkali und Aktivchlor sein.

Aus dem Stand der Technik sind Klarspüler als solche bereits bekannt. In der EP 0 300 305 A2 werden Hydroxyalkylpolyethylenglycolether bzw. deren Mischungen als Zusatz in Klarspülmitteln für die maschinelle Geschirreinigung offenbart. Allerdings enthalten die beanspruchten Verbindungen der EP 0 300 305 nur max. 30 Ethylenoxidgruppen pro Molekül.

Die DE 195 13 391 beschreibt endgruppenverschlossene Dimeralkohol- und Trimeralkoholalkoxylate als schaumarme Tenside.

### Geänderte Beschreibungsseite 2a:

In der EP 0 884 298 A2 werden sogenannte Geminitenside offenbart, die in Reinigungsmitteln verwendet werden können.

In der WO 98/15346 werden Mischungen aus konventionellen Tensiden mit Geminitensiden und polymeren, schmutzablösenden Verbindungen offenbart, ohne dass damit spezifische alkoxylierte Verbindungen, wie in der vorliegenden Anmeldung beschrieben würden.

In der US 3,671,458 werden bestimmte Alkylether beschrieben, die durch Umsetzung von Epoxiden mit Polyolen hergestellt werden. Der Schrift sind keine Hinweise zu entnehmen, dass sich derartige Verbindungen als Tenside für Klarspülmitteln eignen könnten.

In der EP-A-1 254 948 sowie der EP-1 254 949, die beide einen Prioritätstag von 04.05.2001, einen Anmeldetag von 26.04.2002 und einen Veröffentlichungstag von 06.11.2002 haben, werden Geminitenside beschrieben.

Aufgabe der vorliegenden Erfindung war Wasch-, Spül- und Reinigungsmittel bereitzustellen, die gleichzeitig ein gutes Schaum- und Reinigungsverhalten, insbesondere jedoch ein sehr gutes Ablaufverhalten, d.h. eine Verbesserung des Netzverhaltens an Kunststoffoberflächen sowie eine hohe Materialverträglichkeit, insbesondere mit Kunststoffen, zeigen. Außerdem sollten sich vereinfachte feste Reiniger-Formulierungen herstellen lassen.
Die Aufgabe wurde gelöst, indem ausgewählte Tenside vom Typ Geminitenside eingesetzt werden.

### Beschreibung der Erfindung

Gegenstand der Erfindung sind Geminitenside der Formel (I),

**X [-CH**_{**2**}**-CHOH-R)**_{**n**} **(I)**

in der X für ein Polyol-Rest steht, R für einen linearen oder verzweigten Alkyl- und/oder Alkenylrest mit 4 bis 22 Kohlenstoffatomen und n für 2 bis 8 steht.

### Geminitenside

Diese Geminitenside werden durch Umsetzung von 1,2-Epoxyalkanen (CH2CHO-R), wobei R für einen lineraren oder verzweigten, gesättigeten oder ungesättigten Alkyl- und/oder Alkenylrest mit 4 bis 22 Kohlenstoffatomen, vorzugsweise 6 bis 16, insbesondere 8 bis 12 Kohlenstoffatomen steht, mit Polyolen hergestellt. Der Index n steht für 2 bis 8 und gibt die Anzahl der mit dem Epoxid reagierten Hydroxylgruppen aus der Polyolverbindung wieder.

In einer bevorzugten Ausführungsform steht X für einen Polyol-Rest, der ausgewählt ist aus der Gruppe, die gebildet wird von Alkanpolyolen, Alkenpolyolen und Oxyalkylenpolyolen.

Im folgenden wird Polyol als die Sammelbezeichnung für mehrwertige Alkohole bzw. Polyalkylenglycole, d. h. als eine organische Verbindung, die mindestens zwei Hydroxy-Gruppen im Mol enthält, betrachtet. Unter den Polyetherverbindungen sind auch Umsetzungsprodukte von mehrwertigen Alkoholen mit Alkoxylierungsreagenzien wie Ethylenoxid und Propylenoxid zu verstehen.

Unter dem Begriff Polyol-Rest X ist im Sinne der Anmeldung der Rest des eingesetzten Polyols zu verstehen, der nach Reaktion mit seinen Hydroxygruppen und Abgabe eines H an die 1,2-Epoxyalkan-Einhieit verbleibt. Im Falle der Umsetzung von z.B. Ethylenglycol (HO-CH₂CH₂-OH) ist nach Reaktion mit einem 1,2-Epoxyalkan unter dem Polyol-Rest X = O-CH₂CH₂-O zu verstehen.

Bei den Polyolen kann es sich um Alkanpolyole, Alkenpolyole und Oxyalkylenpolyole handeln. Typische Beispiele für Alkanpolyole sind Ethylenglycol, 1,2-Propylenglycol, 1,3-Propandiol, 1,2-Butandiol, 1,3-Butandiol, 1,4-Butandiol, Trimethylolpropan, Pentaerythrit, Glycerin, Glucose u.a. Zuckeralkohole wie Sorbit und Inosit.

Bevorzugt hierbei ist die Umsetzung mit Trimetylolpropan, Pentaerytrit und Glycerin.

Typische Beispiele für **Alkenpolyole** sind 2-Buten-1,4-diol, 2-Hexen-1,4,6-triol und 4-Octin-1,2,7,8-tetrol.

Als typische Beispiele für Oxyalkylenpolyole werden Diethylenglycol, Triethylenglycol, Tetraethylenglycol und Polyethylenglycol, sowie Polyglycerin, Dipropylenglycol und Polypropylenglycol aufgezählt.
Hierzu zählen auch Polyalkylenglycole, also Polymere mit endständigen Hydroxygruppen. Diese Polymere können in Form von Blockpolymeren, die aus Ethylenoxid und Propylenoxid aufgebaut sind, vorliegen. Besonders bevorzugt sind solche Polymere, die **"randomized"** Ethylenoxid- und Propylenoxid-Einheiten enthalten, d.h. durch das vorherige Vermischen der Alkoxylierungsreagenzien werden Polymere erhalten, die über eine statistische (randomized) Verteilung der Alkyleneinheiten verfügen.
Weiterhin können auch Polymere, die durch Ethoxylierung und/oder Propoxylierung, in beliebiger Reihenfolge, von Alkanpolyolen hergestellt werden als Polyole im Sinne der Erfindung wirken. Diese Polyole können also in Form von Blockpolymeren, die aus Ethylenoxid und Propylenoxid aufgebaut sind, vorliegen. Ebenfalls können Polyole in Form von Polymeren, die Ethylenoxid- und Propylenoxid-Einheiten in statistischer Reihenfolge (randomized) enthalten, eingesetzt werden.

Bevorzugt sind Geminitenside auf Basis von Oxyalkylenpolyolen, wobei X für einen Oxyalkylenpolyol-Rest steht.

Besonders bevorzugt sind dabei Geminitenside auf Basis von Polyethylenglycolen, wobei X für einen Polyethylenglycol-Rest mit einem Molgewicht von 200 bis 75 000, vorzugsweise von 400 bis 4000 und insbesondere von 600 bis 2000, R für einen linearen oder verzweigten Alkyl- und/oder Alkenylrest mit 8 bis 12 Kohlenstoffatomen und n für 2 steht.

Ganz besonders bevorzugt sind Geminitenside der Formel (I), wobei X für einen Polyethylenglycol-Rest mit einem Molgewicht 600 bis 2000, R für einen linearen Alkylrest mit 10 Kohlenstoffatomen und n für 2 steht.

In einer weiteren Ausführungsform sind Geminitenside der Formel (I) bevorzugt, die dadurch gekennzeichnet sind, dass sie mindestens 80 Gew.%, vorzugsweise 85 bis 100 Gew.%, insbesondere 95 bis 100 Gew.% Geminitenside enthalten, bei denen mindestens zwei der Hydroxygruppen am Polyol mit 1,2-Epoxyalkan-Einheiten verschlossen sind.

Weiterhin werden in einer weiteren Ausführungsform Wasch-, Spül- und Reinigungsmittel beansprucht, die die erfindungsgemäßen Geminitenside sowie weitere, in Wasch-, Spül- und Reinigungsmittel übliche Inhaltsstoffe, enthalten. Diese üblichen Inhaltsstoffe können, wie nachfolgend beschrieben, Alkylund/oder Alkenyloligoglycoside, weitere nichtionische Tenside, anionische Tenside, Builder, Enzyme und weitere Hilfs- und Zusatzstoffe sein.
Ganz besonders bevorzugt sind hierbei Wasch-, Spül- und Reinigungsmittel, die Geminitenside der Formel (I) enthalten, in der X für einen Polyethylenglycolrest mit einem Molgewicht von 400 bis 4000, R für einen linearen oder verzweigten Alkyl- und/oder Alkenylrest mit 8 bis 12 Kohlenstoffatomen und n für 2 steht.

### Alkyl- und/oder Alkenyloligoglykoside

In einer weiteren Ausführungsform enthalten die erfindungsgemäßen Wasch-, Spül- und Reinigungsmittel Alkyl- und/oder Alkenyloligoglykoside der Formel (II).

**R**^{**1**}**O-[G]**_{**p**} **(II),**

wobei R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, enthalten sind.

Sie können nach den einschlägigen Verfahren der präparativen organischen Chemie erhalten werden. Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligo**glucoside.**
Der **Alkylrest** R¹ kann sich von primären **gesättigten Alkoholen** ableiten. Typische Beispiele sind Butanol-1, Capron-, Önanth-, Capryl-, Pelargon-, Caprinalkohol, Undecanol-1, Laurylalkohol, Tridecanol-1, Myristylalkohol, Pentadecanol-1, Cetylalkohol, Palmitylakohol, Heptadecanol-1, Stearylalkohol, Isostearylalkohol, Nonadecanol-1, Arachidylalkohol, Heneicosanol-1, und Behenylalkohol sowie deren technische Mischungen, wie sie beispielsweise bei der Hydrierung von technischen Fettsäuremethylestem oder im Verlauf der Hydrierung von Aldehyden aus der Roelen'schen Oxosynthese erhalten werden.

Der **Alkenylrest** R¹ kann sich von primären **ungesättigten** Alkoholen ableiten. Typische Beispiele **ungesättigter Alkohole** sind Undecen-1-ol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol, Palmoleylalkohol, Petroselinylalkohol, Arachylalkohol, sowie deren technische Gemische, die wie oben beschrieben erhalten werden können.

**Bevorzugt** werden Alkyl- bzw. Alkenylrest R¹, die sich von primären Alkoholen mit 6 bis 16 Kohlenstoffatomen ableiten.
**Insbesondere geeignet** sind Alkyloligoglucoside der Kettenlänge C₈-C₁₀, die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole.
Der Alkyl- bzw. Alkenylrest R¹ kann sich ferner auch von primären Alkoholen mit 12 bis 14 Kohlenstoffatomen ableiten.

Die Indexzahl p in der allgemeinen Formel (II) gibt den Oligomerisierungsgrad (DP), d.h. die Verteilung von Mono- und Oligoglykosiden an und steht für eine Zahl zwischen 1 und 10. Während p in einer gegebenen Verbindung stets ganzzahlig sein muß und hier insbesondere die Werte p = 1 bis 3 annehmen kann, ist der Wert p für ein bestimmtes Alkyloligoglykosid eine analytisch ermittelte rechnerische Größe, die meistens eine gebrochene Zahl darstellt.
Vorzugsweise werden Alkyl- und/oder Alkenyloligoglykoside mit einem mittleren Oligomerisierungsgrad p von 1,1 bis 2,0 eingesetzt. Aus anwendungstechnischer Sicht sind solche Alkyl- und/oder Alkenyloligoglykoside bevorzugt, deren Oligomerisierungsgrad kleiner als 2,0 ist und insbesondere zwischen 1,2 und 1,7 liegt.

Bevorzugt werden Alkyl- und/oder Alkenyloligoglycoside der Formel (II) eingesetzt, wobei p für Zahlen von 1 bis 3 und R¹ für einen Alkylrest mit 6 bis 16 Kohlenstoffatomen steht.

In einer bevorzugten Ausführungsform enthalten die erfindungsgemäßen Wasch-, Spül- und Reinigungsmittel 0,01 bis 25 Gew.%, vorzugsweise 0,025 bis 20 Gew.% und insbesondere 0,1 bis 15 Gew.% Geminitenside der Formel (I) berechnet als Aktivsubstanz, bezogen auf die Mittel. **Aktivsubstanz** definiert sich hier als die Masse an Tensid (gerechnet als Reinstoff zu 100%), die in dem Mittel enthalten sind.

**In einer weiteren Ausführungsform** enthalten die erfindungsgemäßen Wasch-, Spül- und Reinigungsmittel 0,01 bis 30 Gew.%, vorzugsweise 0,1 bis 20 Gew.% und insbesondere 0,2 bis 15 Gew.% Alkyl- und/oder Alkenyloligoglykoside der Formel (II) berechnet als Aktivsubstanz, bezogen auf die Mittel.

### Nichtionische Tenside

Die erfindugsgemäßen Wasch-, Spül- und Reinigungsmittel können weitere nichtionische Tenside enthalten. Typische Beispiele für nichtionische Tenside sind Alkoxylate von Alkanolen, endgruppenverschlossene Alkoxylate von Alkanolen ohne freie OH-Gruppen , alkoxylierte Fettsäureniedrigalkylester, Aminoxide, Alkylphenolpolyglycolether, Fettsäurepolyglycolester, Fettsäureamidpolyglycolether, Fettaminpolyglycolether, alkoxylierte Triglyceride, Mischether bzw. Mischformale, Fettsäure-N-alkylglucamide, Proteinhydrolysate (insbesondere pflanzliche Produkte auf Weizenbasis), Polyolfettsäureester, Zuckerester, Sorbitanester und Polysorbate. Sofern die nichtionischen Tenside Polyglycoletherketten enthalten, können diese eine konventionelle, vorzugsweise jedoch eine eingeengte Homologenverteilung aufweisen.
**Bevorzugt** sind die weiteren nichtionischen Tenside ausgewählt aus der Gruppe, die gebildet wird von Alkoxylaten **von Alkanolen,** insbesondere Fettalkoholpolyethylenglykol/polypropylenglykolether (FAEO/PO) der Formel (III) bzw. Fettalkoholpolypropylenglykol/polyethylenglykolether (FAPO/EO) der Formel (IV), endgruppenverschlossene Alkoxylate von Alkanole, insbesondere endgruppenverschlossene Fettalkoholpolyethylenglykol/polypropylenglykolether bzw. endgruppenverschlossene Fettalkoholpolypropylenglykol/polyethylenglykolether, und Fettsäureniedrigalkylester und Aminoxiden.

### Fettalkoholpolyethylenglykol/polypropylenglykolether

In einer bevorzugten Ausführungsform werden Fettalkoholpolyethylenglykol/polypropylenglykolether der Formel (III), die gegebenenfalls endgruppenverschlossen sind,

R⁶O(CH₂CH₂O)ₙ₁[CH₂(CH₃)CHO]ₘR⁷ **(III)**

eingesetzt, in der R⁶ für einen Alkyl- und/oder Alkenylrest mit 8 bis 22 C-Atomen, R⁷ für H oder einen Alkylrest mit 1 bis 8 C-Atomen, n1 für eine Zahl von 1 bis 40, vorzugsweise 1 bis 30, insbesondere 1 bis 15, und m für 0 oder eine Zahl von 1 bis 10 steht.

### Fettalkoholpolypropylenglykol/polyethylenglykolether

Ebenso geeignet sind Fettalkoholpolypropylenglykol/polyethylenglykolether der Formel (IV), die gegebenenfalls endgruppenverschlossen sind,

R⁸O[CH₂(CH₃)CHO]_{q}(CH₂CH₂O)ᵣR⁹ **(IV)**

in der R⁸ für einen Alkyl- und/oder Alkenylrest mit 8 bis 22 C-Atomen, R⁹ für H oder einen Alkylrest mit 1 bis 8 C-Atomen, q für eine Zahl von 1 bis 5 und r für eine Zahl von 0 bis 15 steht.

Einer **bevorzugten Ausführungsform** entsprechend enthalten die erfindungsgemäßen Wasch-, Spülund Reinigungsmittel Fettalkoholpolyethylenglykol/polypropylenglykolether der Formel (III), in der R⁶ für einen aliphatischen, gesättigten, geradkettigen oder verzweigten Alkylrest mit 8 bis 16 C-Atomen, n1 für eine Zahl von 1 bis 10, und m für 0 und R⁷ für Wasserstoff steht. Es handelt sich hierbei um Anlagerungsprodukte von 1 bis 10 Mol Ethylenoxid an monofunktionelle Alkohole. Als Alkohole sind die oben beschriebenen Alkohole wie Fettalkohole, Oxoalkohole und Guerbetalkohole geeignet.
Auch geeignet sind von solchen Alkoholethoxylaten solche, die eine eingeengte Homologenverteilung aufweisen.
**Weitere geeignete** Vertreter von nichtendgruppenverschlossenen Vertretern sind solche der Formel (III), in der R⁶ für einen aliphatischen, gesättigten, geradkettigen oder verzweigten Alkylrest mit 8 bis 16 C-Atomen, n1 für eine Zahl von 2 bis 7, m für eine Zahl von 3 bis 7 und R⁷ für Wasserstoff steht. Es handelt sich hierbei um Anlagerungsprodukte von zunächst mit 2 bis 7 Mol Ethylenoxid und dann mit 3 bis 7 Mol Propylenoxid alkoxylierten monofunktionellen Alkohole der schon beschriebenen Art.

Die endgruppenverschlossenen Verbindungen der Formel (III) sind mit einer Alkylgruppe mit 1 bis 8 C-Atomen verschlossen (R⁷). Häufig werden derartige Verbindungen in der Literatur auch als Mischether bezeichnet. Geeignete Vertreter sind Methylgruppenverschlossene Verbindungen der Formel (III), in denen R⁶ für einen aliphatischen, gesättigten, geradkettigen oder verzweigten Alkylrest mit 8 bis 16 C-Atomen, n1 für eine Zahl von 2 bis 7, m für eine Zahl von 3 bis 7 und R⁷ für eine Methylgruppe steht. Derartige Verbindungen können leicht durch Umsetzung der entsprechenden nicht endgruppenverschlossenen Fettalkoholpolyethylenglykol/polypropylenglykolether mit Methylchlorid in Gegenwart einer Base hergestellt werden.

Geeignete Vertreter von alkylgruppenverschlossenen Verbindungen sind solche der Formel (III), in denen R⁶ für einen aliphatischen, gesättigten, geradkettigen oder verzweigten Alkylrest mit 8 bis 16 C-Atomen, n1 für eine Zahl von 5 bis 15, m für 0 und R⁷ für eine Alkylgruppe mit 4 bis 8 C-Atomen steht. Bevorzugt wird der Endgruppenverschluß mit einer geradkettigen oder verzweigten Butylgruppe durchgeführt, indem der entsprechende Fettalkoholpolyethylenglykolether mit n-Butylchlorid oder mit tert. Butylchlorid in Gegenwart von Basen umgesetzt wird.

Anstelle der Verbindungen der Formel (III) oder in Mischung mit ihnen können gegebenenfalls endgruppenverschlossene Fettalkoholpolypropylenglykol/polyethylenglykolether der Formel (IV) enthalten sein. Derartige Verbindungen werden beispielsweise in der deutschen Offenlegungsschrift DE-A1- 43 23 252 beschrieben. Besonders bevorzugte Vertreter der Verbindungen der Formel (IV) sind solche, in denen R⁸ für einen aliphatischen, gesättigten, geradkettigen oder verzweigten Alkylrest mit 8 bis 16 C-Atomen, q für eine Zahl von 1 bis 5, r für eine Zahl von 1 bis 6 und R⁹ für Wasserstoff steht. Es handelt sich hierbei vorzugsweise um Anlagerungsprodukte von 1 bis 5 Mol Propylenoxid und von 1 bis 6 Mol Ethylenoxid an monofunktionelle Alkohole, die bereits im Zusammenhang mit den Geminitensiden als geeignet beschrieben worden sind.

### Alkoxylierte Fettsäureniedrigalkylester

Als alkoxylierte Fettsäureniedrigalkylester kommen Tenside der Formel (V) in Betracht,

**R**^{**10**}**CO-(OCH**_{**2**}**CHR**^{**11**}**)**_{**w**}**OR**^{**12**} **(V)**

in der R¹⁰CO für einen linearen oder verzweigten, gesättigten und/oder ungesättigten Acylrest mit 6 bis 22 Kohlenstoffatomen, R¹¹ für Wasserstoff oder Methyl, R¹² für lineare oder verzweigte Alkylreste mit 1 bis 4 Kohlenstoffatomen und w für Zahlen von 1 bis 20 steht. Typische Beispiele sind die formalen Einschubprodukte von durchschnittlich 1 bis 20 und vorzugsweise 5 bis 10 Mol Ethylen- und/oder Propylenoxid in die Methyl-, Ethyl-, Propyl-, Isopropyl-, Butyl- und tert-Butylester von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Üblicherweise erfolgt die Herstellung der Produkte durch Insertion der Alkylenoxide in die Carbonylesterbindung in Gegenwart spezieller Katalysatoren, wie z.B. calcinierter Hydrotalcit. Besonders bevorzugt sind Umsetzungsprodukte von durchschnittlich 5 bis 10 Mol Ethylenoxid in die Esterbindung von technischen Kokosfettsäuremethylestern.

### Aminoxide

Als Aminoxide können Verbindungen der Formel (VI) und/oder eingesetzt werden.

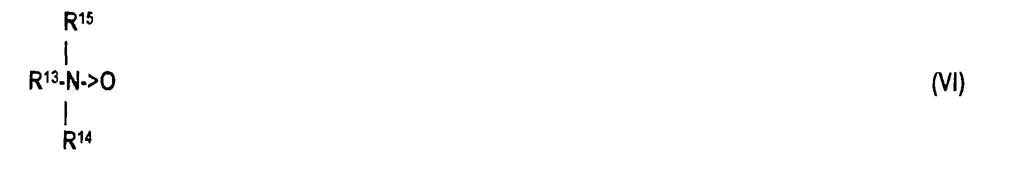

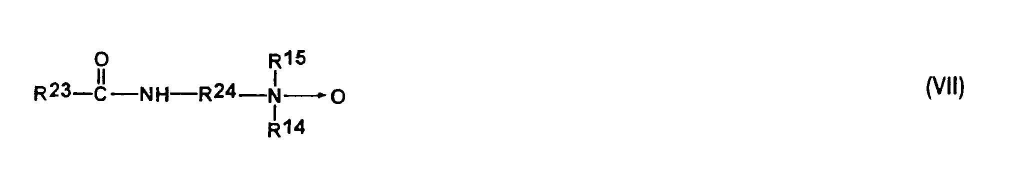

Bei der Herstellung der Aminoxide der Formel (VI) geht man von tertiären Fettaminen aus, die mindestens einen langen Alkylrest aufweisen, und oxidiert sie in Gegenwart von Wasserstoffperoxid. Bei den im Sinne der Erfindung in Betracht kommenden Aminoxiden der Formel (VI) steht R¹³ für einen linearen oder verzweigten Alkylrest mit 6 bis 22, vorzugsweise 12 bis 18 Kohlenstoffatomen, sowie R¹⁴ und R¹⁵ unabhängig voneinander für R¹³ oder einen gegebenenfalls hydroxysubstituierten Alkylrest mit 1 bis 4 Kohlenstoffatomen. Vorzugsweise werden Aminoxide der Formel (**VI**) eingesetzt, in der R¹³ und R¹⁴ für C_{12/14}- bzw. C_{12/18}-Kokosalkylreste stehen und R¹⁵ einen Methyl- oder einen Hydroxyethylrest bedeutet. Ebenfalls bevorzugt sind Aminoxide der Formel (**VI**), in denen R¹³ für einen C_{12/14}- bzw. C_{12/18}- Kokosalkylrest steht und R¹⁴ und R¹⁵ die Bedeutung eines Methyl- oder Hydroxyethylrestes haben.
Weitere geeignete Aminoxide sind Alkylamido-aminoxide der Formel (VII), wobei der Alkylamido-Rest R²³CONH durch die Reaktion von linearen oder verzweigten Carbonsäuren, vorzugsweise mit 6 bis 22, bevorzugt mit 12 bis 18 Kohlenstoffatomen, insbesondere aus C_{12/14}- bzw. C_{12/18}- Fettsäuren mit Aminen entsteht. Dabei stellt R²⁴ eine linerare oder verzweigte Alkylengruppe dar mit 2 bis 6, vorzugsweise 2 bis 4 Kohlenstoffatomen und R¹⁴ und R¹⁵ haben die in Formel (**VI**) angegebene Bedeutung.

Die **weiteren nichtionischen Tenside** können in den erfindungsgemäßen Wasch-, Spül- und Reinigungsmitteln in Mengen von 0,1 bis 15 Gew.%, vorzugsweise 0,5 bis 10 Gew.%, insbesondere 1 bis 8 Gew.% enthalten sein, berechnet als Aktivsubstanz, bezogen auf die Mittel.

Gemäß der vorliegenden Erfindung können die erfindungsgemäßen Wasch-, Spül- und Reinigungsmittel anionische Tenside enthalten.

### Anionische Tenside

Typische Beispiele für **anionische Tenside** sind Seifen, **Alkylbenzolsulfonate,** sekundäre Alkansulfonate, Olefinsulfonate, Alkylethersulfonate, Glycerinethersulfonate, α-Methylestersulfonate, Sulfofettsäuren, **Alkyl- und/oder Alkenylsulfate, Alkylethersulfate, Glycerinethersulfate, Hy**droxymischethersulfate, **Monoglycerid(ether)sulfate,** Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen.

Vorzugsweise sind die anionischen Tenside ausgewählt aus der Gruppe, die gebildet wird von Alkylund/oder Alkenylsulfate, Alkylethersulfate, Alkylbenzolsulfonate, Monoglycerid(ether)sulfate und Alkansulfonate, insbesondere Fettalkoholsulfate, Fettalkoholethersulfate, sekundäre Alkansulfonate und lineare Alkylbenzolsulfonate.

### Alkyl- und/oder Alkenylsulfate

Unter Alkyl- und/oder Alkenylsulfaten, die auch häufig als Fettalkoholsulfate bezeichnet werden, sind die Sulfatierungsprodukte primärer Alkohole zu verstehen, die der Formel (VIII) folgen,

**R**^{**16**}**O-SO**_{**3**}**X (VIII)**

in der R¹⁶ für einen linearen oder verzweigten, aliphatischen Alkyl- und/oder Alkenylrest mit 6 bis 22, vorzugsweise 12 bis 18 Kohlenstoffatomen und X für ein Alkali- und/oder Erdalkalimetall, Ammonium, Alkylammonium, Alkanolammonium oder Glucammonium steht.
Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelenschen Oxosynthese erhalten werden. Die Sulfatierungsprodukte können vorzugsweise in Form ihrer Alkalisalze und insbesondere ihrer Natriumsalze eingesetzt werden. Besonders bevorzugt sind Alkylsulfate auf Basis von C_{16/18}-Talgfettalkoholen bzw. pflanzliche Fettalkohole vergleichbarer C-Kettenverteilung in Form ihrer Natriumsalze.

### Alkylethersulfate

Alkylethersulfate ("Ethersulfate") stellen bekannte anionische Tenside dar, die großtechnisch durch SO₃- oder Chlorsulfonsäure (CSA)-Sulfatierung von Fettalkohol- oder Oxoalkoholpolyglycolethern und nachfolgende Neutralisation hergestellt werden. Im Sinne der Erfindung kommen Ethersulfate in Betracht, die der Formel (IX) folgen,

**R**^{**17**}**O-(CH**_{**2**}**CH**_{**2**}**O)**_{**a**}**SO**_{**3**}**X (IX)**

in der R¹⁷ für einen linearen oder verzweigten Alkyl- und/oder Alkenylrest mit 6 bis 22 Kohlenstoffatomen, a für Zahlen von 1 bis 10 und X für ein Alkali- und/oder Erdalkalimetall, Ammonium, Alkylammonium, Alkanolammonium oder Glucammonium steht. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen in Form ihrer Natrium- und/oder Magnesiumsalze. Die Ethersulfate können dabei sowohl eine konventionelle als auch eine eingeengte Homologenverteilung aufweisen. Besonders bevorzuqt ist der Einsatz von Ethersulfaten auf Basis von Addukten von durchschnittlich 2 bis 3 Mol Ethylenoxid an technische C_{12/14}- bzw. C_{12/18}- Kokosfettalkoholfraktionen in Form ihrer Natrium- und/oder Magnesiumsalze.

### Alkylbenzolsulfonate

Alkylbenzolsulfonate folgen vorzugsweise der Formel (**X**),

**R**^{**18**}**-Ph-SO**_{**3**}**X (X)**

in der R¹⁸ für einen verzweigten, vorzugsweise jedoch linearen Alkylrest mit 10 bis 18 Kohlenstoffatomen, Ph für einen Phenylrest und X für ein Alkali- und/oder Erdalkalimetall, Ammonium, Alkylammonium, Alkanolammonium oder Glucammonium steht. Vorzugsweise werden Dodecylbenzolsulfonate, Tetradecylbenzolsulfonate, Hexadecylbenzolsulfonate sowie deren technische Gemische in Form der Natriumsalze eingesetzt.

### Monoglycerid(ether)sulfate

Monoglyceridsulfate und Monoglyceridethersulfate stellen bekannte anionische Tenside dar, die nach den einschlägigen Methoden der präparativen organischen Chemie erhalten werden können. Üblicherweise geht man zu ihrer Herstellung von Triglyceriden aus, die gegebenenfalls nach Ethoxylierung zu den Monoglyceriden umgeestert und nachfolgend sulfatiert und neutralisiert werden. Gleichfalls ist es möglich, die Partialglyceride mit geeigneten Sulfatierungsmitteln, vorzugsweise gasförmiges Schwefeltrioxid oder Chlorsulfonsäure umzusetzen [vgl. **EP 0561825 B1, EP 0561999 B1** (Henkel)]. Die neutralisierten Stoffe können - falls gewünscht - einer Ultrafiltration unterworfen werden, um den Elektrolytgehalt auf ein gewünschtes Maß zu vermindern [**DE 4204700 A1** (Henkel)]. Übersichten zur Chemie der Monoglyceridsulfate sind beispielsweise von A. K. Biswas et al. in **J.Am.Oil.Chem.Soc. 37, 171 (1960)** und F. U. Ahmed **J.Am.Oil.Chem.Soc. 67, 8 (1990)** erschienen. Die im Sinne der Erfindung einzusetzenden **Monoglycerid(ether)sulfate** folgen der Formel (**XI**), 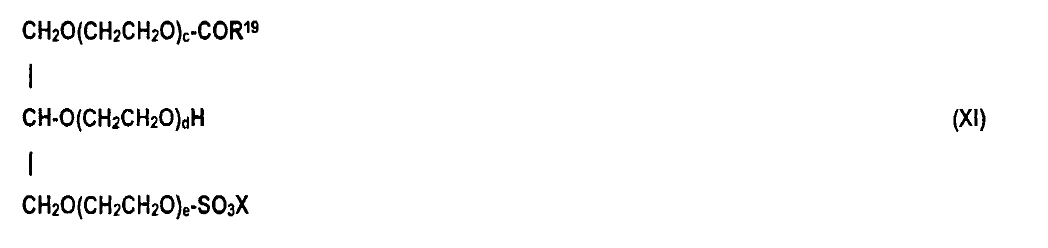 in der R¹⁹CO für einen linearen oder verzweigten Acylrest mit 6 bis 22 Kohlenstoffatomen, c, d und e in Summe für 0 oder für Zahlen von 1 bis 30, vorzugsweise 2 bis 10, und X für ein Alkali- oder Erdalkalimetall steht. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze. Vorzugsweise werden Monoglyceridsulfate der Formel (**XI**) eingesetzt, in der R¹⁹CO für einen linearen Acylrest mit 8 bis 18 Kohlenstoffatomen steht.

### Alkansulfonate

Unter Alkansulfonate versteht man Verbindungen der Formel (XII).

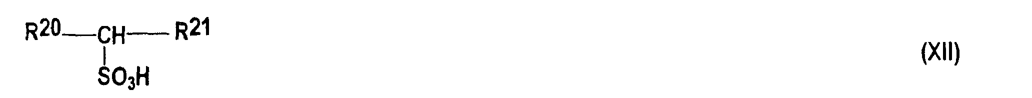

R²⁰ und R²¹ stehen für Alkylreste, wobei R²⁰ und R²¹ zusammen nicht mehr als 50 Kohlenstoffatome haben sollen.

**Zweckmäßigerweise** können die Wasch-, Spül- und Reinigungsmittel 0,01 bis 20 Gew.%, vorzugsweise 0,25 bis 15 Gew.%, insbesondere 0,4 bis 10 Gew.% **anionische Tenside** enthalten, berechnet als Aktivsubstanz, bezogen auf die Mittel. Den zu 100 Gew.% fehlenden Rest können Hilfsund Zusatzstoffe sowie Wasser darstellen.

Die erfindungsgemäßen Wasch-, Spül- und Reinigungsmittel können als **übliche Inhaltstsstoffe** bzw. Hilfs- und Zusatzstoffe beispielsweise **Lösungsvermittler** wie Cumolsulfonat, Ethanol, Isopropylalkohol, Ethylenglycol, Propylenglycol, Butylglycol, Diethylenglycol, Propylenglycolmonobutylether, Polyethylen- bzw. polypropylenglycolether mit Molmassen von 600 bis 1 500 000, vorzugsweise mit einer Molmasse von 400 000 bis 800 000, oder insbesondere Butyldiglycol enthalten. Weiterhin können **Abrasivstoffe,** wie Quarz- bzw. Holzmehl oder Polyethylenreibkörper enthalten sein.
In vielen Fällen ist eine zusätzliche bakterizide Wirkung erwünscht, weswegen die wasch-, Spul- und Reinigungsmittel kationische Tenside oder Biozide, beispielsweise Glucoprotamin, enthalten können. Geeignete Builder sind Zeolithe, Schichtsilicate, Phosphate sowie Ethylendiamintetraessigsäure, Nitrilotriessigsäure, Citronensäure und deren Salz sowie anorganische Phosphonsäuren.
Unter den als Peroxy-Bleichmittel dienenden Verbindungen haben das Natriumperborat-Tetrahydrat und das Natriumperborat-Monohydrat eine besondere Bedeutung. Weitere Bleichmittel sind beispielsweise Peroxycarbonat, Citratperhydrate sowie H₂O₂-liefernde persaure Salze der Persäuren wie Perbenzoate, Peroxyphthalate oder Diperoxydodecandisäure. Sie werden üblicherweise in Mengen von 0,1 bis 40 Gew.-% eingesetzt. Bevorzugt ist der Einsatz von Natriumperborat-Monohydrat in Mengen von 10 bis 20 Gew.-% und insbesondere von 10 bis 15 Gew.-%. Weiterhin bevorzugt ist der Einsatz von Natrium-percarbonat in Verbindung mit Alkyl- und/oder Alkenyloligoglycosiden.

Als **Enzyme** kommen solche aus der Klasse der Proteasen, Lipase, Amylasen, Cellulasen bzw. deren Gemische in Frage. Besonders gut geeignet sind aus Bakterienstämmen oder Pilzen, wie Bacillus subtilis, Bacillus lichenformis und Strptomyces griseus gewonnene enzymatische Wirkstoffe. Vorzugsweise werden Proteasen vom Subtilisin-Typ und insbesondere Proteasen, die aus Bacillus lentes gewonnen werden, eingesetzt. Ihr Anteil kann etwa 0,1 bis 6, vorzugsweise 0,2 bis 2 Gew.-% betragen. Die Enzyme können an Trägerstoffen adsorbiert oder in Hüllsubstanzen eingebettet sein, um sie gegen vorzeitige Zersetzung zu schützen.

Zusätzlich zu mono- und polyfunktionellen Alkoholen und Phosphonaten können die Mittel weitere **Enzymstabilisatoren** enthalten. Beispielsweise können 0,5 bis 1 Gew.-% Natriumformiat eingesetzt werden. Möglich ist auch der Einsatz von Proteasen, die mit löslichen Calciumsalzen und einem Calciumgehalt von vorzugsweise etwa 1,2 Gew.-%, bezogen auf das Enzym, stabilisiert sind. Besonders vorteilhaft ist jedoch der Einsatz von Borverbindungen, beispielsweise von Borsäure, Boroxid, Borax und anderen Alkalimetallboratenwie den Salzen der Orthoborsäure (H₃BO₃), der Metaborsäure (HBO₂) und der Pyroborsäure (Tetraborsäure H₂B₄O₇).

Beim Einsatz im maschinellen Waschverfahren kann es von Vorteil sein, den Mitteln übliche **Schauminhibitoren** zuzusetzen. Geeignete Schauminhibitoren enthalten beispielsweise bekannte Organoolysiloxane und/oder Paraffine oder Wachse. Weiterhin enthalten sein können **Schaumregulatoren**, wie beispielsweise Seife, Fettsäuren, insbesondere Kokosfettsäure und Palmkemfettsäure.

Als **Verdickungsmittel** können beispielsweise gehärtetes Rizinusöl, Salze von langkettigen Fettsäuren, die vorzugsweise in Mengen von 0 bis 5 Gew.-% und insbesondere in Mengen von 0,5 bis 2 Gew.-%, beispielsweise Natrium-, Kalium-, Aluminium-, Magnesium- und Titan-Stearate oder die Natrium und/oder Kaliumsalze der Behensäure, sowie weitere polymere Verbindungen eingesetzt werden. Zu den letzten gehören bevorzugt Polyvinylpyrrolidon, Urethane und die Salze polymerer Polycarboxylate, beispielsweise homopolymerer oder copolymerer Polyacrylate, Polymethacrylate und insbesondere Copolymere der Acrylsäure mit Maleinsäure, vorzugsweise solche aus 50 bis 10 Gew.-% Maleinsäure. Die relative Molekülmasse der Homopolymeren liegt im allgemeinen zwischen 1000 und 100000, die der Copolymeren zwischen 2000 und 200000, vorzugsweise zwischen 50000 bis 120000, bezogen auf die freie Säure. Insbesondere sind auch wasserlösliche Polyacrylate geeignet, die beispielsweise mit etwa 1% eines Polyallylethers der Sucrose quervernetzt sind und die eine relative Molekülmasse oberhalb 1000000 besitzen Beispiele hierfür sind unter dem Namen Carbopol® 940 und 941 erhältliche Polymere. Die quervernetzten Polyacrylate werden vorzugsweise in Mengen nicht über 1 Gew.-% besonders bevorzugt in Mengen von 0,2 bis 0,7 Gew.-% eingesetzt.

In einer weiteren Ausführungsform sind Wasch-, Spül- und Reinigungsmittel, insbesondere für automatische Geschirrspülmaschinen bevorzugt, die 0,1 bis 15, vorzugsweise 0,5 bis 12 Gew.% Tenside enthalten, die Geminitenside der Formel (I) enthalten, **insbesondere** solche auf Basis von Polyethylenglycol, wobei X für einen Polyethylenglycolrest mit eine Molgewicht von 600 bis 2000, R für einen linearen Alkylrest mit 8 bis 12 Kohlenstoffatomen und n für 2 steht.
Außerdem enthalten die erfindungsgemäßen Mittel 5 bis 90, vorzugsweise 10 bis 80 Gew.% Builder, 0,1 bis 6 Gew.% Reinigungsmittelenzym, optional 0,1 bis 40, vorzugsweise 0,5 bis 30 Gew.% Bleichmittel und Hilfs- und Zusatzstoffe. Gew. % ist bezogen auf das Mittel zu verstehen.

**Ein weiteren Gegenstand** der vorliegenden Erfindung ist die Verwendung von Geminitensiden der Formel (I) in Wasch-, Spül- und Reinigungsmitteln, insbesondere zum Spülen und Reinigen von harten Oberflächen, vorzugsweise im Haushalt und den industriellen- und institutionellen Bereich. Besonders geeignet ist der Einsatz in Geschirr-Reinigern, Klarspülern, Badezimmerreiniger, Fußbodenreiniger, Reiniger nach dem clean shower Konzept (z.B. Badezimmerreiniger, der vor und nach dem Duschen auf Wände und Armaturen aufgesprüht wird, damit das Wasser und Seifenreste besser ablaufen, und dadurch ein Nachwischen entfällt), Cockpit-Reiniger (Auto, Flugzeug, Schiff, Motorrad), Fensterreiniger und Allzweckreiniger. Harte Oberflächen sind u.a. Keramikflächen, Metallflächen, lackierte Flächen, Kunststoffoberflächen und Oberflächen aus Glas, Stein, Beton, Porzellan und Holz.

Insbesondere bevorzugt ist die Verwendung der erfindungsgemäßen Geminitenside der Formel (I) zur verbesserung des Netzverhaltens in Wasch-, Spül- und Reinigungsmitteln, vorzugsweise auf harten Oberflächen, insbesondere in maschinellen Geschirr-Reinigern und/oder Klarspülern.

Weiterhin bevorzugt ist die Verwendung von Geminitensiden der Formel (I) zur Verbesserung der Kunstoffverträglichkeit in Wasch-, Spül- und Reinigungsmitteln, insbesondere in maschinellen Geschirr-Reinigern und/oder Klarspülern.

Bevorzugt weiterhin ist die Verwendung von Geminitensiden der Formel (I) in Kombination mit Alkylund/oder Alkenyloligoglykosiden in den bisher aufgeführten Reinigungsbereichen.

Ganz besonders bevorzugt sind die erfindungsgemäßen Geminitenside der Formel (I), gegebenenfalls in Kombination mit den bereits beschriebenen weiteren Tensiden, zur vereinfachten Herstellung von festen Reinigerformulierungen. Die erfindungsgemäßen Geminitensiden können aufgrund ihrer höheren Schmelzpunkte einfacher in Wasch-, Spül- und Reinigungsmittel-Formulierungen, insbesondere in feste Reiniger eingearbeitet werden.

Außerdem bevorzugt ist die Verwendung von Geminitensiden gemäß Formel (I) als schaumdämpfendes Tensid in Klarspülformulierungen.

Im Gegensatz zu den bisher bekannten Hydroxymischethern zeichnen sich die erfindungsgemäßen Geminitenside, neben ihrer schaumdämpfenden Wirkung und der hohen Verträglichkeit, insbesondere gegenüber Kunststoff, durch ihre höheren Schmelzpunkte aus. Dadurch sind sie besonders zur vereinfachten Herstellung von festen Formulierungen geeignet. Ebenso lösen sich die Geminitenside, durch ihre höheren Schmelzpunkte, später in der Reinungsflotte auf und entfalten zeitversetzt, und in höherer Konzentration ihre Wirkung. Dieser Effekt kann besonders vorteilhaft in Klarspülanwendungen genutzt werden.

## Patentansprüche

1. Geminitenside gemäß Formel (I)
**X [-CH**_{**2**}**-CHOH-R]**_{**n**} **(I)**
in der X für eine Polyol-Rest steht, R für einen linearen oder verzweigten Alkyl- und/oder Alkenylrest mit 4 bis 22 Kohlenstoffatomen und n für 2 bis 8 steht.

2. Geminitenside der Formel (I) nach Anspruch 1, wobei X für einen Polyol-Rest steht, der ausgewählt ist aus der Gruppe, die gebildet wird von Alkanpolyolen, Alkenpolyolen und Oxyalkylenpolyolen.

3. Geminitenside der Formel (I) nach Anspruch 2, wobei X für einen Oxyalkylenpolyol-Rest steht.

4. Geminitenside der Formel (I) nach Anspruch 3, wobei X für Polyethylenglycol-Rest mit einem Molgewicht von 200 bis 75 000, bevorzugt von 400 bis 4 000 und insbesondere von 600 bis 2000, R für einen linearen oder verzweigten Alkyl- und/oder Alkenylrest mit 8 bis 12 Kohlenstoffatomen und n für 2 steht.

5. Geminitenside der Formel (I) nach einem der Ansprüche 1 bis 4, **dadurch gekennzeichnet, dass** sie mindestens 80 Gew.% Geminitenside enthalten, bei denen mindestens zwei der Hydroxygruppen am Polyol mit 1,2-Epoxyalkan-Einheiten verschlossen sind.

6. Wasch-, Spül- und Reinigungsmittel, enthaltend Geminitenside der Formel (I) nach Anspruch 1 bis 5, sowie weitere in Wasch-, Spül- und Reinigungsmittel übliche Inhaltsstoffe.

7. Wasch-, Spül- und Reinigungsmittel nach Anspruch 6, **dadurch gekennzeichnet, dass** sie Geminitenside der Formel (I) enthalten, in der X fur einen Polyethylenglycolrest mit einem Molgewicht von 400 bis 4000, R für einen linearen oder verzweigten Alkyl- und/oder Alkenylrest mit 8 bis 12 Kohlenstoffatomen und n für 2 steht.

8. Wasch-, Spül- und Reinigungsmittel nach einem der Ansprüche 6 bis 7, **dadurch gekennzeichnet, dass** sie Alkyl- und/oder Alkenyloligoglykoside der Formel (II) enthalten.
**R**^{**1**}**O-[G]**_{**p**} **(II)**
wobei R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, enthalten sind.

9. Wasch-, Spül- und Reinigungsmittel nach einem der Ansprüche 6 bis 8 **dadurch gekennzeichnet, dass** sie berechnet als Aktivsubstanz, bezogen auf die Mittel - 0,01 bis 25 Gew.% Geminitenside der Formel (I) enthalten.

10. Wasch-, Spül- und Reinigungsmittel nach einem der Ansprüche 6 bis 9, **dadurch gekennzeichnet, dass** sie - berechnet als Aktivsubstanz, bezogen auf die Mittel- 0,01 bis 30 Gew.% Alkyl- und/oder Alkenyloligoglykoside der Formel (II) enthalten.

11. Wasch-, Spül- und Reinigungsmittel nach einem der Ansprüche 6 bis 10, **dadurch gekennzeichnet, dass** sie weitere nichtionische Tenside enthalten, vorzugsweise ausgewählt aus der Gruppe, die gebildet wird von Alkoxylaten von Alkanolen, endgruppenverschlossenen Alkoxylaten von Alkanolen, alkoxylierten Fettsäureniedrigalkylestern und Aminoxiden.

12. Mittel nach Anspruch 11, **dadurch gekennzeichnet, dass** sie - berechnet als Aktivsubstanz, bezogen auf die Mittel - 0,1 bis 15 Gew.% weitere nichtionische Tenside enthalten.

13. Wasch-, Spül- und Reinigungsmittel nach einem der Ansprüche 6 bis 12, **dadurch gekennzeichnet, dass** sie als weitere Komponente anionische Tenside enthalten, vorzugsweise ausgewählt aus der Gruppe, die gebildet wird von Alkyl- und/oder Alkenylsulfaten, Alkylethersulfate, Alkylbenzolsulfonate, Monoglycerid(ether)sulfate und Alkansulfonate.

14. vvascn-, Spul- und Reinigungsmittel nach Ansprucn 13, **dadurch gekennzeichnet, dass** sie- berechnet als Aktivsubstanz, bezogen auf die Mittel - 0,01 bis 20 Gew.% **anionische Tenside** enthalten.

15. Wasch-, Spül- und Reinigungsmittel nach einem der Ansprüche 6 bis 14, enthaltend
a. 0,1 bis 15 Gew.% -bezogen auf die Mittel- Tenside, die Geminitenside der Formel (I) enthalten
b. 5 bis 90 Gew. % -bezogen auf die Mittel- Builder
c. 0,1 bis 6 Gew.% -bezogen auf die Mittel- Reinigungsmittelenzym
d. optional 0,1 bis 40 Gew.% -bezogen auf die Mittel- Bleichmittel und
e. weitere Hilfs- und Zusatzstoffe.

16. Verwendung von Geminitensiden gemäß Formel (I) in Anspruch 1, zur Verbesserung des Netzverhaltens, in Wasch-, Spül- und Reinigungsmitteln.

17. Verwendung von Geminitensiden gemäß Formel (I) in Anspruch 1, zur Verbesserung der Kunststoffverträglichkeit, in Wasch-, Spül- und Reinigungsmitteln, insbesondere in maschinellen Geschirr-Reinigern und/oder Klarspülern.

18. Verwendung von Geminitensiden gemäß Formel (I) in Anspruch 1 zur vereinfachten Herstellung von festen Reinigerformulierungen.

19. Verwendung von Geminitensiden gemäß Formel (I) in Anspruch 1 als schaumdämpfendes Tensid in Klarspülformulierungen.

## Claims

1. A gemini surfactant according to formula (I)
X[-CH₂-CHOH-R]ₙ (I)
in which X is a polyol radical, R is a linear or branched alkyl and/or alkenyl radical having 4 to 22 carbon atoms, and n is 2 to 8.

2. The gemini surfactant of the formula (I) as claimed in claim 1, where X is a polyol radical chosen from the group formed by alkane polyols, alkene polyols and oxyalkylene polyols.

3. The gemini surfactant of the formula (I) as claimed in claim 2, where X is an oxyalkylene polyol radical.

4. The gemini surfactant of the formula (I) as claimed in claim 3, where X is polyethylene glycol radical with a molecular weight of from 200 to 75 000, preferably from 400 to 4000 and in particular from 600 to 2000, R is a linear or branched alkyl and/or alkenyl radical having 8 to 12 carbon atoms and n is 2.

5. The gemini surfactant of the formula (I) as claimed in any of claims 1 to 4, **characterized in that** it comprises at least 80% by weight of gemini surfactants in which at least two of the hydroxyl groups on the polyol are capped with 1,2-epoxyalkane units.

6. A laundry detergent, dishwashing detergent or cleaner comprising gemini surfactants of the formula (I) as claimed in claim 1 to 5, and further ingredients customary in laundry detergents, dishwashing detergents and cleaners.

7. The laundry detergent, dishwashing detergent or cleaner as claimed in claim 6, **characterized in that** it comprises gemini surfactants of the formula (I) in which X is a polyethylene glycol radical with a molecular weight of from 400 to 4000, R is a linear or branched alkyl and/or alkenyl radical having 8 to 12 carbon atoms and n is 2.

8. The laundry detergent, dishwashing detergent or cleaner as claimed in claim 6 to 7, **characterized in that** it comprises alkyl and/or alkenyl oligoglycosides of the formula (II).
R¹O-[G]ₚ (II)
where R¹ is an alkyl and/or alkenyl radical having 4 to 22 carbon atoms, G is a sugar radical having 5 or 6 carbon atoms and p is a number from 1 to 10.

9. The laundry detergent, dishwashing detergent or cleaner as claimed in any of claims 6 to 8, **characterized in that** it comprises, calculated as active substance, based on the composition, 0.01 to 25% by weight of gemini surfactants of the formula (I).

10. The laundry detergent, dishwashing detergent or cleaner as claimed in any of claims 6 to 9, **characterized in that** it comprises, calculated as active substance, based on the composition, 0.01 to 30% by weight of alkyl and/or alkenyl oligoglycosides of the formula (II).

11. The laundry detergent, dishwashing detergent or cleaner as claimed in any of claims 6 to 10, **characterized in that** it comprises further nonionic surfactants, preferably chosen from the group formed by alkoxylates of alkanols, terminally capped alkoxylates of alkanols, alkoxylated fatty acid lower alkyl esters and amine oxides.

12. The composition as claimed in claim 11, **characterized in that** it comprises, calculated as active substance, based on the composition, 0.1 to 15% by weight of **further nonionic surfactants.**

13. The laundry detergent, dishwashing detergent or cleaner as claimed in any of claims 6 to 12, **characterized in that** it comprises, as further component, anionic surfactants, preferably chosen from the group formed by alkyl and/or alkenyl sulfates, alkyl ether sulfates, alkylbenzenesulfonates, monoglyceride (ether) sulfates and alkanesulfonates.

14. The laundry detergent, dishwashing detergent or cleaner as claimed in claim 13, **characterized in that** it comprises, calculated as active substance, based on the composition, 0.01 to 20% by weight of **anionic surfactants.**

15. The laundry detergent, dishwashing detergent or cleaner as claimed in any of claims 6 to 14, comprising
a. 0.1 to 15% by weight, based on the composition, of surfactants which comprise gemini surfactants of the formula (I)
b. 5 to 90% by weight, based on the composition, of builders,
c. 0.1 to 6% by weight, based on the composition, of cleaner enzyme
d. optionally 0.1 to 40% by weight, based on the composition, of bleaches and
e. further auxiliaries and additives.

16. The use of gemini surfactants according to formula (I) in claim 1 for improving the wetting behavior in laundry detergents, dishwashing detergents and cleaners.

17. The use of gemini surfactants according to formula (I) in claim 1 for improving the compatibility with plastics in laundry detergents, dishwashing detergents and cleaners, in particular in machine dishwashing detergents and/or rinse aids.

18. The use of gemini surfactants according to formula (I) in claim 1 for the simplified preparation of solid cleaner formulations.

19. The use of gemini surfactants according to formula (I) in claim 1 as foam-suppressing surfactant in rinse aid formulations.

## Revendications

1. Agents tensioactifs géminés, conformément à la formule I
X [-CH₂-CHOH-R]ₙ (I)
dans laquelle X représente un reste polyol, R représente un reste alkyle et/ou alkényle linéaire ou ramifié ayant de 4 à 22 atomes de carbone et n représente 2 à 8.

2. Agents tensioactifs géminés de formule (I) selon la revendication 1,
dans lesquels
X représente un reste polyol qui est choisi dans le groupe qui est formé des alkane polyols, des alkène polyols et des oxy alkylène polyols.

3. Agents tensioactifs géminés de formule (I) selon la revendication 2,
dans lesquels
X représente un reste oxy alkylène polyol.

4. Agents tensioactifs géminés de formule (I) selon la revendication 3,
dans lesquels
X représente un reste polyéthylène glycol ayant un poids moléculaire de 200 à 75 000 - de préférence de 400 à 4 000 et en particulier de 600 à 2 000, R représente un reste alkyl et/ou alkényle, linéaire ou ramifié, ayant de 8 à 12 atomes de carbone et n représente 2.

5. Agents tensioactifs géminés de formule (I) selon l'une des revendications 1 à 4,
**caractérisés en ce qu'**
ils contiennent au moins 80 % d'agents tensioactifs géminés dans lesquels au moins deux des groupes hydroxy sur le polyol sont bloqués avec des éléments 1,2-époxy alkane.

6. Produits de lavage, de rinçage et de nettoyage contenant des agents tensioactifs géminés de formule (I), selon les revendications 1 à 5 ainsi que d'autres ingrédients usuels dans les produits de lavage, de rinçage et de nettoyage.

7. Produits de lavage, de rinçage et de nettoyage selon la revendication 6,
**caractérisés en ce que**
ils renferment des agents tensioactifs géminés de formule (I) dans laquelle X représente un reste polyéthylène glycol ayant un poids moléculaire allant de 400 à 4 000, R représente un reste alkyle et/ou alkényle linéaire ou ramifié ayant de 8 à 12 atomes de carbone et n représente 2.

8. Produits de lavage, de rinçage et de nettoyage selon l'une des revendications 6 à 7,
**caractérisés en ce que**
ils renferment des alkyl et/ou des alkényl oligo glycosides de formule (II) :
R¹O - [G]p (II)
dans laquelle R¹ représente un reste alkyle et/ou alkényle ayant de 4 à 22 atomes de carbone, G représente un reste de sucre ayant 5 ou 6 atomes de carbone et p représente des nombres allant de 1 à 10.

9. Produits de lavage, de rinçage et de nettoyage selon l'une des revendications 6 à 8,
**caractérisés en ce que**
ils contiennent - calculé comme substance active, rapporté au produit - de 0,01 à 25 % en poids d'agents tensioactifs géminés de formule (I).

10. Produits de lavage, de rinçage et de nettoyage selon l'une des revendications 6 à 9,
**caractérisés en ce que**
ils contiennent - calculé comme substance active, rapporté au produit - de 0,01 à 30 % en poids d'alkyl - et/ou alknéyloligoglycosides de formule (II).

11. Produits de lavage, de rinçage et de nettoyage selon l'une des revendications 6 à 10,
**caractérisés en ce que**
ils renferment d'autres agents tensioactifs non ioniques, de préférence choisis dans le groupe qui est formé par des alkoxylates d'alkanols, des alkoxylates bloqués sur le groupe terminal, d'alkanols, d'esters d'alkyle inférieur d'acide gras et d'amino-oxydes.

12. Produits de lavage, de rinçage et de nettoyage selon la revendication 1,
**caractérisés en ce que**
ils renferment - calculé en tant que substance active - par rapport au produit - de 0,1 à 15 % en poids d'autres agents tensioactifs non ioniques.

13. Produits de lavage, de rinçage et de nettoyage selon l'une des revendications 6 à 12,
**caractérisés en ce que**
ils renferment comme composants supplémentaires, des agents tensioactifs anioniques, de préférence choisis dans le groupe qui est formé des alkyl- et/ou alkényl-sulfates, des sulfates d'éther d'alkyle, des alkylbenzène sulfonates, des (éther) sulfates de monoglycéride et des alkane sulfonates.

14. Produits de lavage, de rinçage et de nettoyage selon la revendication 13,
**caractérisés en ce que**
ils renferment - calculé en tant que substance active par rapport au produit - de 0,01 à 20 % en poids d'agents tensioactifs anioniques.

15. Produits de lavage, de rinçage et de nettoyage selon l'une des revendications 6 à 14, contenant :
a) de 0,1 à 15 % en poids - par rapport au produit - d'agents tensioactifs qui renferment les agents tensioactifs géminés de formule (I) ;
b) de 5 à 90 % en poids - par rapport au produit - d'agent de structuration ;
c) de 0,1 à 6 % en poids - par rapport au produit - d'enzyme pour produit de nettoyage ;
d) éventuellement de 0,1 à 40 % en poids - par rapport au produit - d'agents de blanchiment ; et
e) d'autres produits adjuvants et d'additifs.

16. Utilisation d'agents tensioactifs géminés conformément à la formule (I) dans la revendication 1, en vue de l'amélioration du comportement au mouillage, dans les produits de lavage, de rinçage et de nettoyage.

17. Utilisation d'agents tensioactifs géminés conformément à la formule (I) dans la revendication 1, en vue de l'amélioration de la compatibilité avec les matières plastiques dans les produits de lavage, de rinçage et de nettoyage, en particulier dans les produits de nettoyage pour la vaisselle, à la machine et/ou dans les produits de rinçage limpides.

18. Utilisation d'agents tensioactifs géminés conformément à la formule (I) dans la revendication 1, en vue de faciliter la production de formulations d'agents de nettoyage solides.

19. Utilisation d'agents tensioactifs géminés conformément à la formule (I) dans la revendication 1, comme agent tensioactif anti-mousse dans les formulations de produits de rinçage limpides.
